# EUROPEAN PATENT APPLICATION

(11) **EP 2 173 017 A1**
(43) Date of publication of application: **07.04.2010**
(21) Application number: 08765624.5
(22) Date of filing: 10.06.2008
(51) Int. Cl.: H02J 7/02, B60L 11/18, H01M 10/44, H02J 7/10, H02M 3/00

(54) **CONTROL DEVICE AND CONTROL METHOD FOR ELECTRIC SYSTEM**

(30) Priority: 25.07.2007 JP 2007193587
(71) Applicant: Toyota Jidosha Kabushiki Kaisha, Toyota-shi, Aichi-ken 471-8571 (JP)
(72) Inventor: IIDA, Takahide, Kariya-shi Aichi 448-8671 (JP)
(74) Representative: TBK-Patent
(86) International application number: PCT/JP2008/060931
(87) International publication number: WO 2009/013952

(57) **Abstract**

An electric system including a first converter and a second converter connected in parallel executes a program including a step (S 140) of controlling a value of a voltage of a section between the first converter and the second converter to be higher by a predetermined value than either voltage value V(1) or voltage value V(2), whichever is higher, and a step (S 150) of controlling the value of the voltage of the section between the first converter and the second converter to attain to the same voltage value as either voltage value V(1) or voltage value V(2), whichever is higher.

## Description

### Technical Field

The present invention relates to a control device and a control method for an electric system, and more particularly to a technique of controlling a converter in accordance with a voltage of a power storage mechanism.

### Background Art

Conventionally, hybrid vehicles, electric vehicles and the like have been known that run by driving force of an electric motor. These vehicles have a power storage mechanism, such as a battery, mounted thereon for storing electric power to be supplied to the electric motor serving as a driving source. In order to increase a travel distance by the electric motor, it is conceivable to increase a capacity by increasing the number of power storage mechanisms mounted on the vehicle. If the number of power storage mechanisms connected in series is increased, an output voltage increases accordingly. In this case, a cable or the like having a large rated voltage needs to be used, which may result in increased costs. It is therefore conceivable to connect a plurality of power storage mechanisms in parallel.

Japanese Patent No. 3655277 discloses a power supply control system including at least one inverter for providing conditioned electric power to an electric traction motor, a plurality of power supply stages for providing DC power to the at least one inverter, each stage including a battery and a boost/buck DC-DC converter and being wired in parallel, and a controller for controlling the plurality of power supply stages to maintain an output voltage to the at least one inverter by uniformly charging and discharging the batteries of the plurality of power supply stages.

As described in Japanese Patent No. 3655277, in a system including a plurality of power storage mechanisms (batteries), in order to uniformly charge each power storage mechanism, it may be required to cause flow of electricity from any of the power storage mechanisms toward another power storage mechanism through a converter connected to each power storage mechanism. During flow of electricity through the converter, however, an electric loss may occur at the converter. However, Japanese Patent No. 3655277 is silent about such a problem.

### Disclosure of the Invention

An object of the present invention is to provide a control device and a control method for an electric system that are capable of reducing an electric loss.

A control device for an electric system according to an aspect includes a first converter for varying a voltage, a second converter connected in parallel to the first converter for varying a voltage, a first power storage mechanism connected to the first converter for storing electric power, a second power storage mechanism connected to the second converter for storing electric power, a first voltage sensor for detecting a voltage of the first power storage mechanism, a second voltage sensor for detecting a voltage of the second power storage mechanism, and a control unit for controlling the first converter and the second converter based on either the voltage of the first power storage mechanism or the voltage of the second power storage mechanism, whichever is higher.

According to this configuration, the first converter and the second converter are connected in parallel. The first converter is connected to the first power storage mechanism. The second converter is connected to the second power storage mechanism. The first converter and the second converter are controlled based on either the voltage of the first power storage mechanism or the voltage of the second power storage mechanism, whichever is higher. For instance, the first converter and the second converter are controlled such that a voltage of a section between the first converter and the second converter is made higher by a predetermined value than either the voltage of the first power storage mechanism or the voltage of the second power storage mechanism, whichever is higher. In addition, the first converter and the second converter are controlled such that the voltage of the section between the first converter and the second converter attains to the same voltage as either the voltage of the first power storage mechanism or the voltage of the second power storage mechanism, whichever is higher. As a result, an amount of voltage raised by the converter in order to cause flow of electricity from the power storage mechanism having a higher voltage toward the power storage mechanism having a lower voltage can be minimized or reduced to zero. Accordingly, an electric loss at the converter can be reduced, thereby reducing an electric loss.

Preferably, the control unit controls the first converter and the second converter such that the voltage of the section between the first converter and the second converter is made higher by the predetermined value than either the voltage of the first power storage mechanism or the voltage of the second power storage mechanism, whichever is higher.

According to this configuration, the first converter and the second converter are controlled such that the voltage of the section between the first converter and the second converter is made higher by the predetermined value than either the voltage of the first power storage mechanism or the voltage of the second power storage mechanism, whichever is higher. As a result, an amount of voltage raised by the converter in order to cause flow of electricity from the power storage mechanism having a higher voltage toward the power storage mechanism having a lower voltage can be minimized. Accordingly, an electric loss at the converter can be reduced.

Still preferably, the control unit controls the first converter and the second converter such that the voltage of the section between the first converter and the second converter attains to the same voltage as either the voltage of the first power storage mechanism or the voltage of the second power storage mechanism, whichever is higher.

According to this configuration, the first converter and the second converter are controlled such that the voltage of the section between the first converter and the second converter attains to the same voltage as either the voltage of the first power storage mechanism or the voltage of the second power storage mechanism, whichever is higher. As a result, an amount of voltage raised by the converter in order to cause flow of electricity from the power storage mechanism having a higher voltage toward the power storage mechanism having a lower voltage can be reduced to zero. Accordingly, an electric loss at the converter can be reduced.

Still preferably, when a difference between the voltage of the first power storage mechanism and the voltage of the second power storage mechanism is smaller than a threshold value, the control unit controls the first converter and the second converter such that a voltage of a section between the first converter and the second converter is made higher by a predetermined value than either the voltage of the first power storage mechanism or the voltage of the second power storage mechanism, whichever is higher, and when the difference between the voltage of the first power storage mechanism and the voltage of the second power storage mechanism is greater than the threshold value, the control unit controls the first converter and the second converter such that the voltage of the section between the first converter and the second converter attains to the same voltage as either the voltage of the first power storage mechanism or the voltage of the second power storage mechanism, whichever is higher.

According to this configuration, when the difference between the voltage of the first power storage mechanism and the voltage of the second power storage mechanism is smaller than the threshold value, the first converter and the second converter are controlled such that the voltage of the section between the first converter and the second converter is made higher by the predetermined value than either the voltage of the first power storage mechanism or the voltage of the second power storage mechanism, whichever is higher. When the difference between the voltage of the first power storage mechanism and the voltage of the second power storage mechanism is greater than the threshold value, the first converter and the second converter are controlled such that the voltage of the section between the first converter and the second converter attains to the same voltage as either the voltage of the first power storage mechanism or the voltage of the second power storage mechanism, whichever is higher. As a result, an amount of voltage raised by the converter in order to cause flow of electricity from the power storage mechanism having a higher voltage toward the power storage mechanism having a lower voltage can be minimized or reduced to zero. Accordingly, an electric loss at the converter can be reduced.

### Brief Description of the Drawings

Fig. 1 is a schematic configuration diagram showing a hybrid vehicle.
Fig. 2 is a functional block diagram of an ECU.
Fig. 3 shows a voltage value V(1) of a first battery pack and a voltage value V(2) of a second battery pack.
Fig. 4 shows a control structure of a program executed by the ECU.

### Best Modes for Carrying Out the Invention

An embodiment of the present invention will be described hereinafter with reference to the drawings. In the following description, the same components are designated with the same characters. Their names and functions are also the same. Accordingly, detailed descriptions thereof will not be repeated.

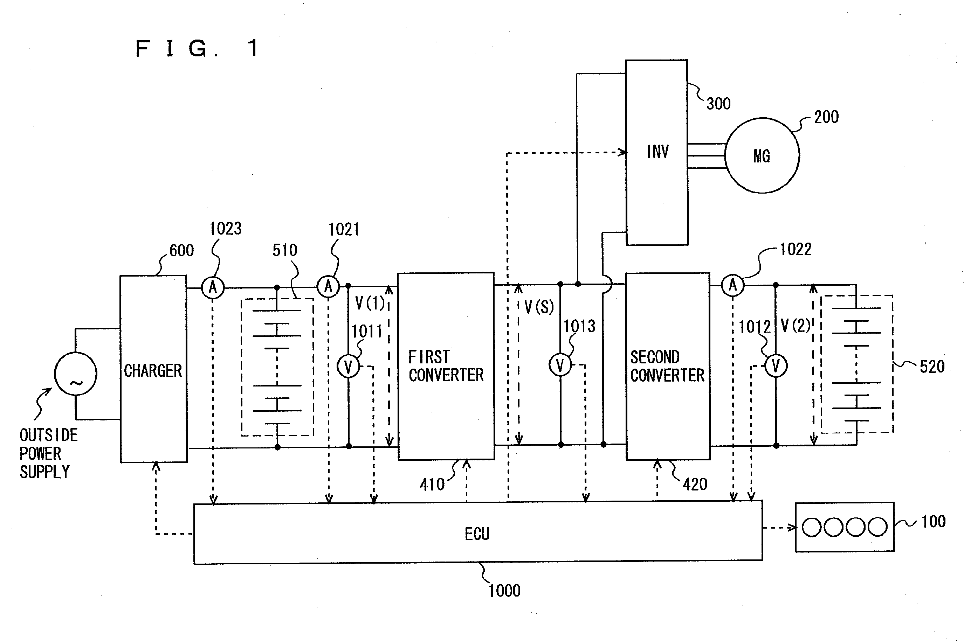

Referring to Fig. 1, a hybrid vehicle having a control device for an electric system according to the present embodiment mounted thereon will be described. This hybrid vehicle has an engine 100, an MG (Motor Generator) 200, an inverter 300, a first converter 410, a second converter 420, a first battery pack 510, a second battery pack 520, a charger 600, and an ECU (Electronic Control Unit) 1000. It is noted that ECU 1000 may be divided into a plurality ofECUs.

The electric system includes MG 200, inverter 300, first converter 410, second converter 420, first battery pack 510, second battery pack 520, and charger 600. The hybrid vehicle runs by driving force from at least any one of engine 100 and MG 200.

MG 200 is a three-phase AC motor. MG 200 is driven by electric power stored in first battery pack 510 and second battery pack 520. MG 200 is supplied with electric power having been converted from DC to AC by inverter 300.

The driving force of MG 200 is transmitted to wheels, so that MG 200 assists engine 100, runs the vehicle by its driving force, and the like. During regenerative braking of the hybrid vehicle, on the other hand, MG 200 is driven by the wheels, to be operated as a generator. MG 200 thus operates as a regenerative brake converting braking energy to electric power. The electric power generated by MG 200 is converted from AC to DC by inverter 300, and then stored in first battery pack 510 and second battery pack 520.

First battery pack 510 and second battery pack 520 are assembled batteries formed by integrating a plurality of battery cells into a battery module, and further connecting a plurality of the battery modules in series. A discharge voltage from first battery pack 510 and a charging voltage into first battery pack 510 are adjusted by first converter 410. A discharge voltage from second battery pack 520 and a charging voltage into second battery pack 520 are adjusted by second converter 420.

First converter 410 and second converter 420 are connected in parallel. First converter 410 is connected to first battery pack 510. Second converter 420 is connected to second battery pack 520. Thus, first battery pack 510 and second battery pack 520 are connected in parallel via first converter 410 and second converter 420. Inverter 300 is connected between first converter 410 and second converter 420.

A positive electrode terminal and a negative electrode terminal of first battery pack 510 are connected to charger 600. Thus, first battery pack 510 and second battery pack 520 are connected in parallel with respect to charger 600. It is noted that capacitors (condensers) may be used instead of the batteries.

When charging first battery pack 510 and second battery pack 520, charger 600 supplies electric power to first battery pack 510 and second battery pack 520 from outside the hybrid vehicle. It is noted that charger 600 may be installed outside the hybrid vehicle.

Engine 100, inverter 300, first converter 410, second converter 420 and charger 600 are controlled by ECU 1000. ECU 1000 receives signals from voltage sensors 1011 to 1013 and current sensors 1021 to 1023.

Voltage sensor 1011 detects a voltage value V(1) of first battery pack 510. Voltage sensor 1012 detects a voltage value V(2) of second battery pack 520. Voltage sensor 1013 detects a system voltage value (a voltage value of a section between first converter 410 and second converter 420) V(S).

Current sensor 1021 detects a value of a current discharged from first battery pack 510 or a value of a current charged into first battery pack 510. Current sensor 1022 detects a value of a current discharged from second battery pack 520 or a value of a current charged into second battery pack 520. Current sensor 1023 detects a value of a current supplied from charger 600 to first battery pack 510 and second battery pack 520.

ECU 1000 calculates states of charge (SOC) of first battery pack 510 and second battery pack 520 based on the voltage values, the current values and the like input from these sensors. Well-known common techniques may be used as a method of calculating the state of charge, and a detailed description thereof will therefore not be repeated here.

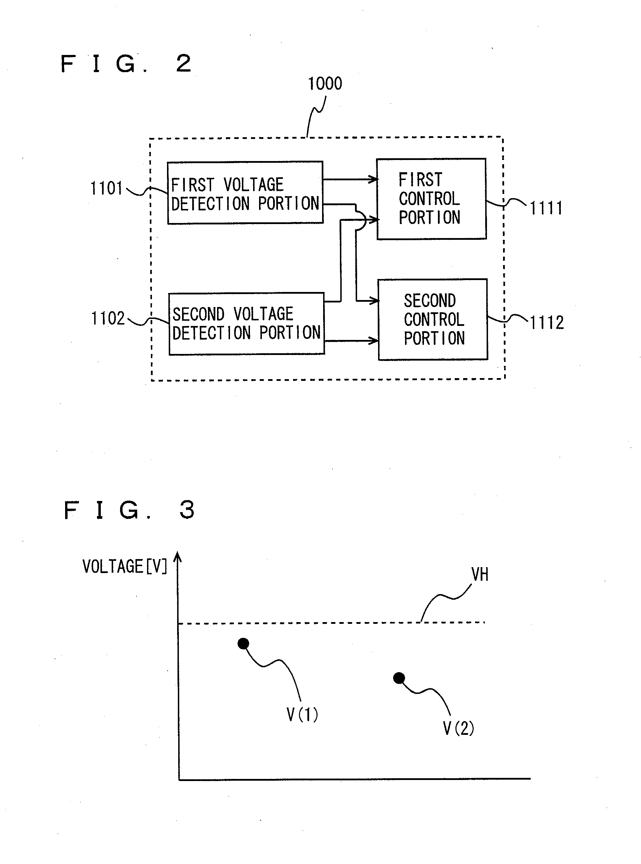

Referring to Fig. 2, a function of ECU 1000 will be described. It is noted that the function of ECU 1000 which will be described below may be implemented with software, or may be implemented with hardware.

ECU 1000 includes a first voltage detection portion 1101, a second voltage detection portion 1102, a first control portion 1111, and a second control portion 1112.

First voltage detection portion 1101 detects voltage value V(1) of first battery pack 510 based on the signal transmitted from voltage sensor 1011. Second voltage detection portion 1102 detects voltage value V(2) of second battery pack 520 based on the signal transmitted from voltage sensor 1012.

When a difference between voltage value V(1) of first battery pack 510 and voltage value V(2) of second battery pack 520 is smaller than a threshold value, first control portion 1111 controls first converter 410 and second converter 420 such that system voltage value V(S) is made higher by a predetermined value than either voltage value V(1) of first battery pack 510 or voltage value V(2) of second battery pack 520, whichever is higher.

For instance, when voltage value V(1) of first battery pack 510 is higher than voltage value V(2) of second battery pack 520, as shown in Fig. 3, first converter 410 is controlled such that the system voltage increases slightly to a voltage VH comparable to a sum of voltage value V(1) of first battery pack 510 and the predetermined value. At this time, second converter 420 is controlled only to allow passage of a current, and not to increase or decrease the voltage.

Conversely, for instance, when voltage value V(2) of second battery pack 520 is higher than voltage value V(1) of first battery pack 510, second converter 420 is controlled such that the system voltage increases slightly to voltage VH comparable to a sum of voltage value V(2) of second battery pack 520 and the predetermined value. At this time, first converter 410 is controlled only to allow passage of a current, and not to increase or decrease the voltage.

When the difference between voltage value V(1) of first battery pack 510 and voltage value V(2) of second battery pack 520 is greater than or equal to the threshold value, second control portion 1112 controls first converter 410 and second converter 420 such that system voltage value V(S) attains to the same voltage value as either voltage value V(1) of first battery pack 510 or voltage value V(2) of second battery pack 520, whichever is higher.

That is, when the difference between voltage value V(1) of first battery pack 510 and voltage value V(2) of second battery pack 520 is greater than or equal to the threshold value, first converter 410 and second converter 420 are controlled only to allow passage of current, and not to increase or decrease the voltages.

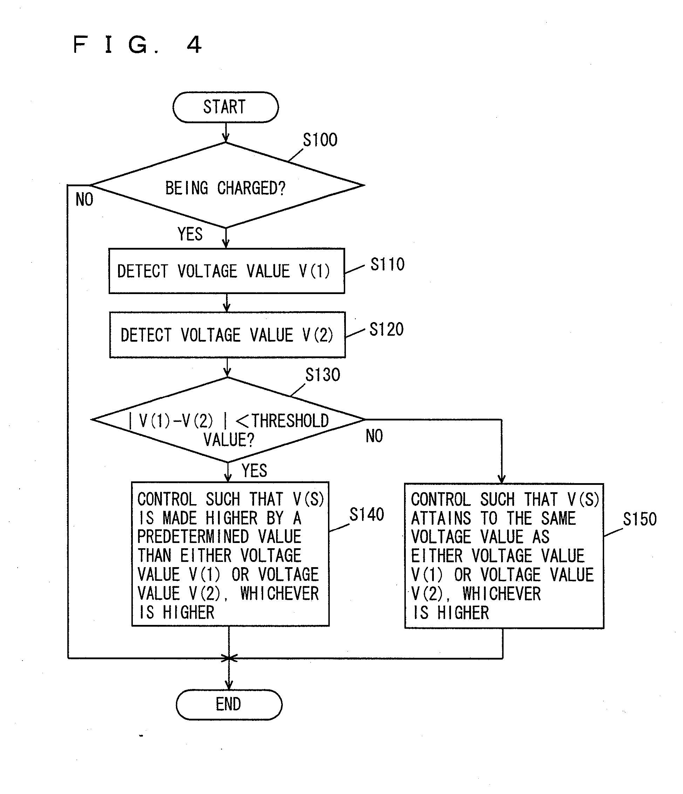

Referring to Fig. 4, a control structure of a program executed by ECU 1000 will be described. It is noted that the program executed by ECU 1000 may be recorded onto recording media such as CDs (Compact Discs), DVDs (Digital Versatile Discs) and the like, and distributed to the market.

At step (a step will be abbreviated as S hereinafter) 100, ECU 1000 determines whether first battery pack 510 and second battery pack 520 are being charged. For instance, if electric power is being output from charger 600, it is determined that first battery pack 510 and second battery pack 520 are being charged.

If first battery pack 510 and second battery pack 520 are being charged (YES at S100), the process proceeds to S110. If not (NO at S100), this process ends.

At S110, ECU 1000 detects voltage value V(1) of first battery pack 510 based on the signal transmitted from voltage sensor 1011. At S 120, ECU 1000 detects voltage value V(2) of second battery pack 520 based on the signal transmitted from voltage sensor 1012.

At S 130, ECU 1000 determines whether the difference between voltage value V(1) of first battery pack 510 and voltage value V(2) of second battery pack 520 is smaller than the threshold value. If the difference between voltage value V(1) of first battery pack 510 and voltage value V(2) of second battery pack 520 is smaller than the threshold value (YES at S130), the process proceeds to S140. If not (NO at S130), the process proceeds to S150.

At S 140, ECU 1000 controls first converter 410 and second converter 420 such that system voltage value V(S) is made higher by the predetermined value than either voltage value V(1) of first battery pack 510 or voltage value V(2) of second battery pack 520, whichever is higher.

At S 150, ECU 1000 controls first converter 410 and second converter 420 such that system voltage value V(S) attains to the same voltage value as either voltage value V(1) of first battery pack 510 or voltage value V(2) of second battery pack 520, whichever is higher.

The operation of ECU 1000 of the control device according to the embodiment based on the above-described structure and flowchart will be described.

When charging first battery pack 510 and second battery pack 520, it is desirable that first battery pack 510 and second battery pack 520 are charged to have equal states of charge. In order to equalize the states of charge, it is required to feed electricity from the battery pack having a greater state of charge toward the battery pack having a smaller state of charge, i.e., from the battery pack having a higher voltage toward the battery pack having a lower voltage.

To that end, if first battery pack 510 and second battery pack 520 are being charged (YES at S100), voltage value V(1) of first battery pack 510 is detected (S110). Further, voltage value V(2) of second battery pack 520 is detected (S120).

If the difference between voltage value V(1) of first battery pack 510 and voltage value V(2) of second battery pack 520 is smaller than the threshold value (YES at S 130), first converter 410 and second converter 420 are controlled such that system voltage value V(S) is made higher by the predetermined value than either voltage value V(1) of first battery pack 510 or voltage value V(2) of second battery pack 520, whichever is higher (S 140).

On the other hand, if the difference between voltage value V(1) of first battery pack 510 and voltage value V(2) of second battery pack 520 is greater than or equal to the threshold value (NO at S130), first converter 410 and second converter 420 are controlled such that system voltage value V(S) attains to the same voltage value as either voltage value V(1) of first battery pack 510 or voltage value V(2) of second battery pack 520, whichever is higher (S 150).

As a result, the amount of voltage raised by first converter 410 or second converter 420 in order to cause flow of electricity from the battery pack having a higher voltage toward the battery pack having a lower voltage can be minimized or reduced to zero. Accordingly, an electric loss at first converter 410 or second converter 420 can be reduced.

As described above, in the control device for an electric system according to the present embodiment, when the difference between voltage value V(1) of the first battery pack and voltage value V(2) of the second battery pack is smaller than the threshold value, the first converter and the second converter are controlled such that system voltage value V(S) is made higher by the predetermined value than either voltage value V(1) of the first battery pack or voltage value V(2) of the second battery pack, whichever is higher. On the other hand, when the difference between voltage value V(1) of the first battery pack and voltage value V(2) of the second battery pack is greater than or equal to the threshold value, the first converter and the second converter are controlled such that system voltage value V(S) attains to the same voltage value as either voltage value V(1) of the first battery pack or voltage value V(2) of the second battery pack, whichever is higher. As a result, the amount of voltage raised by the first converter or the second converter in order to cause flow of electricity from the battery pack having a higher voltage toward the battery pack having a lower voltage can be minimized or reduced to zero. Accordingly, an electric loss at the first converter or the second converter can be reduced.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

## Claims

1. A control device for an electric system, comprising:
a first converter (410) for varying a voltage;
a second converter (420) connected in parallel to said first converter (410) for varying a voltage;
a first power storage mechanism (510) connected to said first converter (410) for storing electric power;
a second power storage mechanism (520) connected to said second converter (420) for storing electric power;
a first voltage sensor (1011) for detecting a voltage of said first power storage mechanism (510);
a second voltage sensor (1012) for detecting a voltage of said second power storage mechanism (520); and
a control unit (1000) for controlling said first converter (410) and said second converter (420) based on either the voltage of said first power storage mechanism (510) or the voltage of said second power storage mechanism (520), whichever is higher.

2. The control device for an electric system according to claim 1, wherein
said control unit (1000) controls said first converter (410) and said second converter (420) such that a voltage of a section between said first converter (410) and said second converter (420) is made higher by a predetermined value than either the voltage of said first power storage mechanism (510) or the voltage of said second power storage mechanism (520), whichever is higher.

3. The control device for an electric system according to claim 1, wherein
said control unit (1000) controls said first converter (410) and said second converter (420) such that a voltage of a section between said first converter (410) and said second converter (420) attains to a voltage as high as either the voltage of said first power storage mechanism (510) or the voltage of said second power storage mechanism (520), whichever is higher.

4. The control device for an electric system according to claim 1, wherein
when a difference between the voltage of said first power storage mechanism (510) and the voltage of said second power storage mechanism (520) is smaller than a threshold value, said control unit (1000) controls said first converter (410) and said second converter (420) such that a voltage of a section between said first converter (410) and said second converter (420) is made higher by a predetermined value than either the voltage of said first power storage mechanism (510) or the voltage of said second power storage mechanism (520), whichever is higher, and
when the difference between the voltage of said first power storage mechanism (510) and the voltage of said second power storage mechanism (520) is greater than said threshold value, said control unit (1000) controls said first converter (410) and said second converter (420) such that the voltage of the section between said first converter (410) and said second converter (420) attains to a voltage as high as either the voltage of said first power storage mechanism (510) or the voltage of said second power storage mechanism (520), whichever is higher.

5. A control method for an electric system including a first converter (410) for varying a voltage, a second converter (420) connected in parallel to said first converter (410) for varying a voltage, a first power storage mechanism (510) connected to said first converter (410) for storing electric power, and a second power storage mechanism (520) connected to said second converter (420) for storing electric power, comprising the steps of:
detecting a voltage of said first power storage mechanism (510);
detecting a voltage of said second power storage mechanism (520); and
controlling said first converter (410) and said second converter (420) based on either the voltage of said first power storage mechanism (510) or the voltage of said second power storage mechanism (520), whichever is higher.

6. The control method for an electric system according to claim 5, wherein
said step of controlling said first converter (410) and said second converter (420) includes the step of controlling said first converter (410) and said second converter (420) such that a voltage of a section between said first converter (410) and said second converter (420) is made higher by a predetermined value than either the voltage of said first power storage mechanism (510) or the voltage of said second power storage mechanism (520), whichever is higher.

7. The control method for an electric system according to claim 5, wherein
said step of controlling said first converter (410) and said second converter (420) includes the step of controlling said first converter (410) and said second converter (420) such that a voltage of a section between said first converter (410) and said second converter (420) attains to a voltage as high as either the voltage of said first power storage mechanism (510) or the voltage of said second power storage mechanism (520), whichever is higher.

8. The control method for an electric system according to claim 5, wherein
said step of controlling said first converter (410) and said second converter (420) includes the steps of
controlling, when a difference between the voltage of said first power storage mechanism (510) and the voltage of said second power storage mechanism (520) is smaller than a threshold value, said first converter (410) and said second converter (420) such that a voltage of a section between said first converter (410) and said second converter (420) is made higher by a predetermined value than either the voltage of said first power storage mechanism (510) or the voltage of said second power storage mechanism (520), whichever is higher, and
controlling, when the difference between the voltage of said first power storage mechanism (510) and the voltage of said second power storage mechanism (520) is greater than said threshold value, said first converter (410) and said second converter (420) such that the voltage of the section between said first converter (410) and said second converter (420) attains to a voltage as high as either the voltage of said first power storage mechanism (510) or the voltage of said second power storage mechanism (520), whichever is higher.

9. A control device for an electric system, comprising:
a first converter (410) for varying a voltage;
a second converter (420) connected in parallel to said first converter (410) for varying a voltage;
a first power storage mechanism (510) connected to said first converter (410) for storing electric power;
a second power storage mechanism (520) connected to said second converter (420) for storing electric power;
means (1011) for detecting a voltage of said first power storage mechanism (510);
means (1012) for detecting a voltage of said second power storage mechanism (520); and
control means (1000) for controlling said first converter (410) and said second converter (420) based on either the voltage of said first power storage mechanism (510) or the voltage of said second power storage mechanism (520), whichever is higher.

10. The control device for an electric system according to claim 9, wherein
said control means (1000) includes means for controlling said first converter (410) and said second converter (420) such that a voltage of a section between said first converter (410) and said second converter (420) is made higher by a predetermined value than either the voltage of said first power storage mechanism (510) or the voltage of said second power storage mechanism (520), whichever is higher.

11. The control device for an electric system according to claim 9, wherein
said control means (1000) includes means for controlling said first converter (410) and said second converter (420) such that a voltage of a section between said first converter (410) and said second converter (420) attains to a voltage as high as either the voltage of said first power storage mechanism (510) or the voltage of said second power storage mechanism (520), whichever is higher.

12. The control device for an electric system according to claim 9, wherein
said control means (1000) includes
means for controlling, when a difference between the voltage of said first power storage mechanism (510) and the voltage of said second power storage mechanism (520) is smaller than a threshold value, said first converter (410) and said second converter (420) such that a voltage of a section between said first converter (410) and said second converter (420) is made higher by a predetermined value than either the voltage of said first power storage mechanism (510) or the voltage of said second power storage mechanism (520), whichever is higher, and
means for controlling, when the difference between the voltage of said first power storage mechanism (510) and the voltage of said second power storage mechanism (520) is greater than said threshold value, said first converter (410) and said second converter (420) such that the voltage of the section between said first converter (410) and said second converter (420) attains to a voltage as high as either the voltage of said first power storage mechanism (510) or the voltage of said second power storage mechanism (520), whichever is higher.
